Europäisches Patentamt

European Patent Office

Office européen des brevets

(19)

(11) Numéro de publication: **0 152 635**
**A1**

# (12) DEMANDE DE BREVET EUROPEEN

(21) Numéro de dépôt: **84200217.2**

(22) Date de dépôt: **20.02.84**

(51) Int. Cl.⁴: **G 09 B 9/00**, G 09 B 9/08

(43) Date de publication de la demande: **28.08.85**
**Bulletin 85/35**

(84) Etats contractants désignés: **AT BE CH DE FR GB IT LI LU NL SE**

(71) Demandeur: **ATELIERS DE CONSTRUCTIONS ELECTRIQUES DE CHARLEROI (ACEC) Société Anonyme, Avenue Lloyd George 7, B-1050 Bruxelles (BE)**

(72) Inventeur: **Burny, Gilbert Jules Florent, Avenue des Genêts, 34, B-6001 Marcinelle (BE)**

(74) Mandataire: **Bossard, Franz et al, ACEC - Service des Brevets Boîte Postale 4, B-6000 Charleroi (BE)**

(54) **Procédé de simulation d'images de configurations présentant un intérêt pour un pilote s'entraînant sur un simulateur ou un véhicule réel.**

(57) Dans un procédé de simulation d'images de configurations diverses présentant un intérêt pour un pilote d'un véhicule réel ou représenté par un simulateur, on choisit arbitrairement, en tenant compte du domaine de variation d'une configuration réelle, les coordonnées d'un ou de plusieurs points culminants ou centres d'un ensemble de configurations simulés et pour chacun de ces points, une loi de variation d'une grandeur dont au moins un niveau ou une condition est détectable; on introduit dans un ordinateur les données définissant, par rapport au véhicule réel ou simulé, les coordonnées de ces points culminants ou centres et les paramètres des lois et des niveaux ou conditions détectables, et on calcule et affiche dans le véhicule réel ou simulé, en temps réel les images des niveaux ou conditions détectables des configurations simulées.

EP 0 152 635 A1

ACTORUM AG

PROCEDE DE SIMULATION D'IMAGES DE CONFIGURATIONS PRESENTANT UN INTERET
POUR UN PILOTE S'ENTRAINANT SUR UN SIMULATEUR OU UN VEHICULE REEL

La présente invention a pour objet un procédé de simulation d'images de configurations diverses, par exemple présentant un obstacle, un danger, un but à poursuivre ou un autre intérêt pour un pilote d'un véhicule représenté par un simulateur d'entraînement.

L'invention est applicable par exemple aux simulateurs d'entraînement à station fixe d'avion, de bateau, de char de combat, etc. Toutefois, comme l'installation mettant en oeuvre le procédé suivant l'invention ne nécessite pas un matériel lourd et encombrant, le procédé de simulation suivant l'invention peut être utilisé aussi par exemple même sur un avion de chasse en vol réel pour la figuration simulée d'obstacles, de dangers ou de buts à poursuivre.

Les configurations, objet du procédé de simulation suivant l'invention, peuvent être, par exemple, des montagnes apparaissant dans le champ de vision directe d'une installation à station fixe ou sur un écran de vision simulée d'un avion de chasse. Un autre exemple est un banc de poissons à poursuivre par un bateau dont l'image apparaît sur un écran de sonar. Un troisième exemple est un ensemble de zones de grêle au cours d'un orage révélé sur un écran de radar d'un avion.

Il est déjà connu d'utiliser dans des simulateurs des films ou découpes de films représentant l'aspect de configurations montagneuses obtenues lors d'un vol antérieur suivant un trajet à travers ces montagnes. Cependant, dans un tel cas, il n'est pas possible de montrer l'aspect variable des montanges selon un trajet arbitraire, mais seulement selon le même trajet que celui de l'avion ayant porté la caméra lors des prises de vues. D'autre part, il n'est pas concevable, pratiquement et économiquement, de reconstituer point par point une configuration géographique réelle et d'en montrer les aspects variables selon un trajet arbitraire simulé d'un avion.

L'invention permet de porter remède à cette situation par un procédé réalisable pratiquement et économiquement. L'invention est basée sur le principe que la forme précise des configurations à simuler doit ressembler à des configurations réelles de la nature choisie, mais il suffit que cette ressemblance soit grossière. En d'autres mots, une
05.05/1912.

certaine stylisation des formes est tolérable. En effet, le but poursuivi par l'invention n'est pas de simuler la forme d'une configuration réelle déterminée, mais le comportement de l'image, par exemple d'un ensemble de montagnes lorsqu'un avion approche, ou contourne ou traverse ces montagnes à des hauteurs et selon des trajets déterminés arbitrairement. Ces trajets sont déterminés par les commandes manipulées par le pilote et éventuellement en fonction aussi des conditions météorologiques dont on tient compte lors du calcul du trajet simulé d'un avion. Dans ce cas, peu importe les formes précises ou fortement stylisées des montagnes simulées apparaissant dans le champ de vision du simulateur, pourvu qu'elles soient suffisamment imprévues. L'exercice de vol à travers ces montagnes simulées consiste à ne pas les approcher de trop près comme c'est le cas avec des montagnes d'autres formes, imprévues elles aussi, dans la réalité.

Suivant l'invention, on choisit arbitrairement, en tenant compte du domaine de variation d'une configuration réelle, les coordonnées d'un ou plusieurs points culminants ou centres d'un ensemble de configurations simulées et pour chacun de ces points une loi de variation d'une grandeur dont au moins un niveau ou une condition est détectable, qu'on introduit dans un ordinateur les données définissant, par rapport au véhicule réel ou simulé les coordonnées de ces points culminants ou centres et les paramètres des lois et des niveaux ou conditions détectables et qu'on calcule et affiche dans le véhicule réel ou simulé, en temps réel, les images des niveaux ou conditions détectables des configurations simulées.

L'invention est décrite ci-dessous par rapport à quelques exemples de formes d'exécution en se référant au dessin annexé.

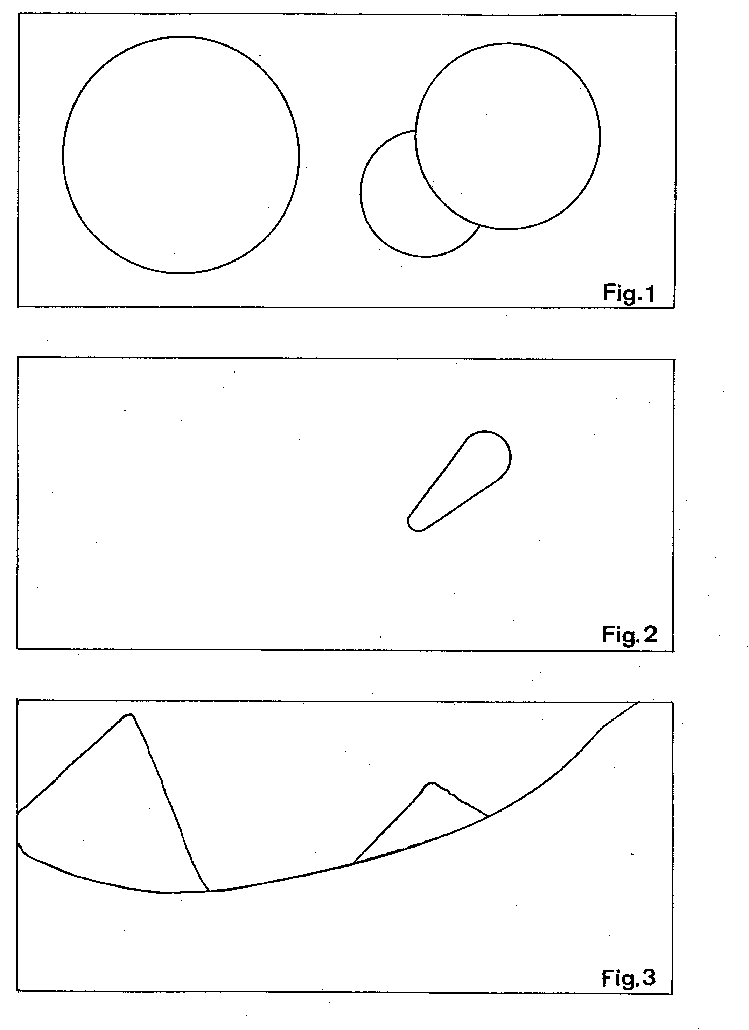

La figure 1 de ce dessin montre une image sur un écran de radar.

A la figure 1, trois centres de zones de grêle sont visibles sur un écran de radar. Les coordonnées de ces trois centres, ainsi que les paramètres d'une loi de répartition de température autour de chacun de ces centres sont introduits dans un ordinateur. Un niveau détectable est supposé être une surface isothermique de par exemple + 2° C à l'intérieur de laquelle il existe des grelons, tandis qu'à l'extérieur il n'existe que des gouttes de pluie. Or, en réalité la zone de grelons est détectable par une installation de radar. L'ordinateur fournit une image des surfaces isothermiques + 2° C sur un écran de simulation de radar en fonction de la position de l'avion par rapport à ces zones et calcule en temps réel, en fonction de la manipulation des commandes de l'avion ou du simulateur d'avion par le pilote, la variation des images de ces zones. Le calcul de l'ordinateur peut tenir compte en outre des vents réguliers ou en rafale auxquels est exposé l'avion pour déterminer la position de ce dernier par rapport aux centres de grêle. Il est possible de tenir compte aussi de la vitesse propre de ces zones, qui est déterminée par la vitesse propre des centres en variant de manière continue les coordonnées des positions absolues de ces centres. En outre, il est possible de simuler la dissolution lente au cours du temps des zones de grêle. Ceci peut être obtenu au moyen d'une variation des paramètres des lois de répartition, en l'occurence de la température.

Il est à remarquer que chaque centre nécessite la fixation de trois coordonnées : le centre et de par exemple deux paramètres de la loi de répartition de température (T exp $(t/r^2)$), r étant la distance d'une surface isothermique du centre, t et T étant des paramètres. Le nombre de données à introduire est donc très modeste et les calculs nécessaires sont simples et rapides à exécuter. Il est ainsi aisément possible d'opérer un affichage en temps réel, même avec un ordinateur peu performant. La taille de l'ordinateur ne doit pas être grand car une mémoire de 16 Mbytes peut déjà être est largement suffisant.

Il est de ce fait possible aussi de simuler de tels orages pendant un vol réel et d'afficher la situation de ces zones de grêle sur un écran de simulation de l'avion réel. En effet, l'ordinateur nécessaire peut être emporté aisément par un avion même de petite taille (avion de chasse).

Des conditions très simples analogues existent aussi dans le cas de la représentation de bancs de poissons simulés sur un écran de sonar d'un bateau. (Fig.2).

Par contre, la représentation d'une configuration topographique (Fig.3) nécessite une puissance de calcul plus importante et par conséquent un ordinateur plus performant, si l'affichage doit se faire en temps réel. Dans un tel cas, un grand nombre de coordonnées de sommets (sommets en pointe, sommets en ligne à hauteur constante, plans inclinés, etc) peuvent être données et autour de chacun de ces sommets une variation simple de lignes de niveau (lignes de niveau équidistantes, lignes de niveau à écartements agrandissants ou rétrécissants, etc).

Une configuration montagneuse compliquée peut ensuite être obtenue au moyen de superpositions des éléments simples. Il est possible en outre de calculer ensuite, par exemple les contours de la région montagneuse et d'afficher par exemple la distance la plus petite entre l'avion et la surface de montagne la plus proche de l'avion. Ce dernier affichage peut être chiffré et il est entendu que l'affichage chiffré de données est aussi appelé ici "image d'une condition détectable".

Un autre exemple est la simulation de tourbillons dangereux tels que ceux appelés "wind shear". En donnant l'axe des tourbillons, leurs pieds au sol ou sur un avion, ainsi que leurs énergies, il est possible de calculer les rafales ou vents qu'ils engendrent et leurs influences sur un avion qui les aborde et traverse. Il s'agit là de conditions de vol extrêmement dangereuses pour lesquelles tout entraînement sauf sur un simulateur est exclu. Comme de telles situations ne sont pas détectables en vol réel au moyen des appareils actuellement connus et utilisés, l'affichage de ces conditions peut se faire sur un écran visible par l'instructeur seulement soit de manière chiffrée soit sous forme d'une image dont la présentation est à déterminer par convention.

0152635

## REVENDICATIONS

1.   Procédé de simulation d'images de configurations diverses présentant un intérêt pour un pilote d'un véhicule réel ou représenté par un simulateur,

caractérisé en ce qu'on choisit arbitrairement, en tenant compte du domaine de variation d'une configuration réelle, les coordonnées d'un ou de plusieurs points culminants ou centres d'un ensemble de configurations simulés et pour chacun de ces points, une loi de variation d'une grandeur dont au moins un niveau ou une condition est détectable, qu'on introduit dans un ordinateur les données définissant, par rapport au véhicule simulé, les coordonnées de ces points culminants ou centres et les paramètres des lois et des niveaux ou conditions détectables et qu'on calcule et affiche dans le véhicule réel ou simulé, en temps réel les images des niveaux ou conditions détectables des configurations simulées.

2.   Procédé suivant la revendication 1, caractérisé en ce qu'on varie de manière continue la position absolue des dits points culminants ou centres en tenant compte du domaine des variations des vitesses propres des configurations simulées.

3.   Procédé suivant une des revendications précédentes, caractérisé en ce qu'on varie de manière continue un ou plusieurs paramètres des dites lois.

4.   Installation de simulation réalisant le procédé suivant une des revendications précédentes, caractérisé en ce qu'elle est commandée en fonction des commandes d'un véhicule simulé ou d'un véhicule réel.

05.05/1912.

Fig. 1

Fig. 2

Fig. 3

## DOCUMENTS CONSIDERES COMME PERTINENTS

| Catégorie | Citation du document avec indication, en cas de besoin des parties pertinentes | Revendication concernée | CLASSEMENT DE LA DEMANDE (Int. Cl. ³) |
|---|---|---|---|
| A | GB-A-2 091 979 (THE SECRETARY OF STATE FOR INDUSTRY) <br> * Page 2, lignes 52-60, page 3, lignes 10-42, revendications 5, 9, 16 * | 1 | G 09 B 9/00 <br> G 09 B 9/08 |
| | --- | | |
| A | US-A-3 996 673 (C.J. VORST et al.) <br> * Colonne 2, abrégé * | 1 | |
| | --- | | |
| A | GB-A-2 030 429 (HITACHI LTD.) <br><br> * Page 1, lignes 95-117 * | | |
| | --- | | |
| A | US-A-4 173 081 (M. MILLARD et al.) <br> * Revendication 2 * | | |
| | ----- | | |

**DOMAINES TECHNIQUES RECHERCHES (Int. Cl. ³)**

G 09 B 9/00
G 09 B 9/02
G 09 B 9/06
G 09 B 9/08

Le présent rapport de recherche a été établi pour toutes les revendications

| Lieu de la recherche <br> BERLIN | Date d'achèvement de la recherche <br> 05-10-1984 | Examinateur <br> FUCHS R |
|---|---|---|